# EUROPÄISCHE PATENTSCHRIFT

(11) **EP 1 618 017 B1**
(45) Veröffentlichungstag und Bekanntmachung des Hinweises auf die Patenterteilung: **28.04.2010**
(21) Anmeldenummer: 04711569.6
(22) Anmeldetag: 17.02.2004
(51) Int. Cl.: B60N 2/48, B60R 21/01

(54) **VORRICHTUNG ZUR ANSTEUERUNG EINER AKTIVEN KOPFSTÜTZE IN EINEM FAHRZEUG**
DEVICE FOR TRIGGERING AN ACTIVE HEADREST IN A VEHICLE
DISPOSITIF POUR AMORCER UN APPUIE-TETE ACTIF DANS UN VEHICULE

(30) Priorität: 17.04.2003 DE 10317637
(43) Veröffentlichungstag der Anmeldung: 25.01.2006
(73) Patentinhaber: ROBERT BOSCH GMBH, 70442 Stuttgart (DE)
(72) Erfinder: EISELE, Sybille, 31139 Hildesheim (DE); ROELLEKE, Michael, 71229 Leonberg (DE); KOEHLER, Armin, 74343 Sachsenheim (DE); WALZ, Volker, 74321 Bietigheim-Bissingen (DE)
(86) Internationale Anmeldenummer: PCT/DE2004/000288
(87) Internationale Veröffentlichungsnummer: WO 2004/094184

(56) Entgegenhaltungen:
- DE-A- 19 729 960
- GB-A- 2 368 518
- US-A1- 2001 040 065
- US-A1- 2002 105 416
- US-A1- 2003 051 530
- US-B1- 6 278 360

## Beschreibung

### Stand der Technik

Die Erfindung geht aus von einem Verfahren zur Ansteuerung einer aktiven Kopfstütze für ein Fahrzeug nach der Gattung des unabhängigen Patentanspruchs.

Aus DE 10138 248 C1 ist eine aktive Kopfstütze bekannt, um bei einem Crash eine bessere Stützung des Kopfes zu erreichen.

Aus US 2001/0040065 A1 ist es bekannt eine Kopfstütze in Abhängigkeit von einem Signal eines Abstandssensors und eines Beschleunigungssensors anzusteuern, und somit ein Verfahren mit den vorkennzeichnenden Merkmalen des Anspruchs 1.

### Vorteile der Erfindung

Die erfindungsgemäße Verfahren zur Ansteuerung einer aktiven Kopfstütze für ein Fahrzeug mit den Merkmalen des unabhängigen Patentanspruchs hat Vorteile, dass die Kopfstütze in Abhängigkeit von einer Verknüpfung von Signalen eines zentral angeordneten Aufprallsensors und eines weiteren Aufprallsensors, der sich im Heck des Fahrzeugs befindet, angesteuert wird. Als Signal kann entweder die Beschleunigung verwendet werden bei einem Aufprall, also die Verzögerung, oder der Geschwindigkeitsabbau, also die Integration der Verzögerung. Dies führt zu einer besseren Unterscheidung zwischen einem Auslösefall und einem Nichtauslösefall. Außerdem wird dadurch die Bestimmung der Auslösezeit für den Einsatz der aktiven Kopfstütze verbessert.

Es ist vorgesehen, dass das Signal des zentral angeordneten Aufprallsensors mit einer Schwelle verglichen wird, die selbst in Abhängigkeit vom Signal des Aufprallsensors im Heckbereich verändert wird. Damit nimmt also das Signal vom Heckbereich Einfluss auf die Schwelle für das Signal des zentral angeordneten Aufprallsensors. Die Schwelle wird also damit durch das Signal des im Heckbereich angeordneten Aufprallsensors in ihrer Empfindlichkeit entweder verstärkt oder abgeschwächt Als Signal, das der im Heckbereich angeordnete Aufprallsensor bestimmt, ist die Aufprallgeschwindigkeit zu sehen.

Durch die in dem abhängigen Anspruch aufgeführten Merkmale und Weiterbildung sind vorteilhafte Verbesserungen der im unabhängigen Patentanspruch angegebenen Vorrichtung zur Ansteuerung einer aktiven Kopfstütze in einem Fahrzeug möglich.

Es kann noch ein weiterer Aufprallsensor vorgesehen sein, der beispielsweise auch im Steuergerät angeordnet ist, der ein drittes Signal erzeugt und als Plausibilitätssensor dient. Dies kann beispielsweise ein Haemlin-Schalter sein.

### Zeichnung

Ausführungsbeispiele der Erfindung sind in der Zeichnung dargestellt und werden in der nachfolgenden Beschreibung näher erläutert.

Es zeigen Figur 1 eine schematische Darstellung der erfindungsgemäßen Vorrichtung, Figur 2 ein Blockschaltbild, Figur 3 ein Flussdiagramm und Figur 4 ein Einflussfaktor-Aufprallgeschwindigkeitsdiagramm.

### Beschreibung

Um bei einer Heckkollision die problematischen Halswirbelsäulenverletzungen zu verhindern, wird über einen Auslösealgorithmus eine crash-aktive Kopfstütze aktiviert. Dabei wird die Kopfstütze über aufblasbare Komponenten oder durch ein reversibles Federsystem während des Unfalls an die Kopfposition angepasst, um eine Scherbewegung der Halswirbelsäule zu verhindern. Es können hier auch elektromotorische Faktoren verwendet werden. Die Aktuatoren müssen schon ab einem relativ geringen Geschwindigkeitsabbau aktiviert werden, sodass die Zündung innerhalb der ersten dreißig Millisekunden erfolgen sollte. Hierbei ist anzustreben, dass eine Auslösung der aktiven Kopfstütze bei sogenannten "No-Fire-Crashes", z. B. einem Reparatur-Crash oder ähnlichem, vermieden wird.

Die Kopfstütze wird in Abhängigkeit von einem zentral erzeugten Geschwindigkeitsabbausignal angesteuert. Um weiteren Anforderungen an Separierbarkeit und Auslösezeit, vor allem für reversible Systeme, Genüge zu tun, ist eine Entscheidung mit rein zentral im Fahrzeug gemessenen Sensorgrößen wie der Beschleunigung unter Umständen keine ausreichende Sicherheit mehr zuzubilligen.

Die Erfindung basiert auf der Idee, den zentral basierten Beschleunigungsalgorithmus, welcher auf prinzipiell zeitveränderlichen Schwellen für das Geschwindigkeitsabbausignal beruht, durch Kombination mit der Information der relativen Aufprallgeschwindigkeit eines von hinten sich nähernden Objekts zu steuern. Eine mögliche Auslöseschwelle kann somit in ihrer Empfindlichkeit entweder verstärkt oder abgeschwächt werden.

Vorteilhafterweise werden drei Sensortypen gezeigt, die die Aufprallgeschwindigkeit ermitteln können:
1. Radarsensor
2. Ultraschallsensor
3. Beschleunigungssensor im Heck

Der Vorteil des Radarsensors ist der große Geschwindigkeitsbereich, welcher abgedeckt werden kann. Der Ultraschallsensor kann als Mehrfachnutzen durch eine schon bestehende Einparkhilfefunktion genutzt werden. Hier können allerdings nur die niedrigen Geschwindigkeitsbereiche abgedeckt werden, was für die Ansteuerung einer aktiven Kopfstütze ausreichend ist, da sich hier genau die Schwäche eines zentral sensierenden Beschleunigungsalgorithmus befindet. Für große Geschwindigkeiten reicht meist der zentral sensierende Algorithmus aus.

Aus einem Beschleunigungssensor im Fahrzeugheck kann durch die intrusionverursachte Relativbewegung eine Schätzung auf die relative Aufprallgeschwindigkeit errechnet werden.

Die beschriebene Vorrichtung ist mit einem zentral im Fahrzeug befindlichen Beschleunigungssensor, welcher in Fahrtrichtung sensitiv ausgestattet ist, versehen. Zur Plausibilisierung kann ein zweiter Sensor, welcher ebenfalls in Fahrtrichtung oder auch in einem beliebigen Winkel dazu steht, herangezogen werden.

Das zentrale Beschleunigungssignal wird durch Integration in einen Geschwindigkeitsabbau überführt. Aus dieser Größe wird durch Vergleich mit einer applizierbaren, grundsätzlich zeitveränderbaren Schwelle das Auslösesignal erzeugt und über einen zweiten Pfad plausibilisiert. Die grundsätzlich zeitveränderliche Schwelle kann durch die Information einer relativen Aufprallgeschwindigkeit am Fahrzeugheck gesteuert werden, d. h. in der Empfindlichkeit verstärkt oder abgeschwächt. Um diese Information zu erzeugen, befindet sich im System ein Zusatzsensor im Heckbereich und eine Aufbereitungseinheit, welche aus der jeweiligen Sensorgröße die relative Aufprallgeschwindigkeit erzeugt.

Da zur Erzeugung der Auslöseentscheidung zwei unabhängige Sensoren verwendet werden, kann ein dritter Aufprallsensor zur Plausibilisierung auch eingespart werden und durch die Verknüpfung des ersten und zweiten Aufprallsensors bereits eine Plausibilisierung erzeugt werden.

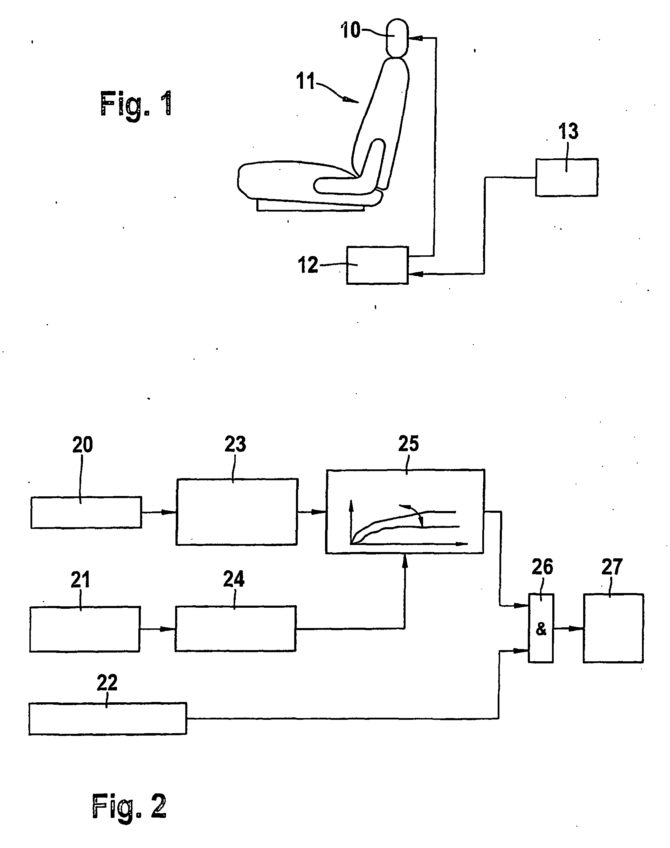

Figur 1 zeigt in einer schematischen Darstellung die erfindungsgemäße Vorrichtung. Ein Fahrzeugsitz 11 weist eine aktive Kopfstütze 10 auf. Die aktive Kopfstütze 10 kann durch Federn oder elektromotorische Kraft oder Zündmechanismen bei einem Crash zur Unterstützung des Kopfes der auf dem Fahrzeugsitz 11 sitzenden Person angesteuert werden. Diese Ansteuerung wird durch ein Steuergerät 12 erreicht, das meist das Steuergerät für Rückhaltesysteme ist und üblicherweise auf dem Fahrzeugtunnel angeordnet ist. Das Steuergerät 12 weist einen ersten Aufprallsensor auf, der in Fahrzeuglängsrichtung empfindlich ist. Dazu kann entweder ein Beschleunigungssensor direkt in Fahrzeuglängsrichtung empfindlich sein, oder es kann eine winklige Anordnung von Beschleunigungssensoren verwendet werden, um die entsprechende Empfindlichkeit auch in Fahrzeuglängsrichtung aufzuweisen. Das Steuergerät 12 hat über einen Dateneingang eine Verbindung mit einem Aufprallsensor 13, der im Fahrzeugheck angeordnet ist. Der Aufprallsensor 13 ist derart konfiguriert, dass er die Aufprallgeschwindigkeit zwischen einem Aufprallobjekt und dem Fahrzeug ermittelt. Dazu kann der Aufprallsensor 13 entweder ein Radarsensor, ein Ultraschallsensor oder ein Beschleunigungssensor sein. Es können jeweils mehrere solcher Sensoren verwendet werden oder auch Kombinationen dieser unterschiedlichen Sensortypen. Zur Bestimmung der Aufprallgeschwindigkeit weisen der Aufprallsensor 13 oder das Steuergerät 12 entsprechende Prozessormittel auf, um aus dem Signal des Aufprallsensors 13 die Aufprallgeschwindigkeit zu ermitteln. Das Steuergerät 12 kann zusätzlich einen dritten Aufprallsensor aufweisen, der zur Plausibilität verwendet wird. Dieser Aufprallsensor kann entweder auch ein Beschleunigungssensor sein, der in Fahrzeuglängsrichtung angeordnet ist oder winklig dazu. Es kann sogar ein Aufprallsensor sein, der in Fahrzeugquerrichtung angeordnet ist, um anhand des Signals, das dieser Aufprallsensor in Fahrzeugquerrichtung ermittelt, eine Abschätzung zu machen, ob eine Auslöseentscheidung durch die in Fahrzeuglängsrichtung empfindlichen Aufprallsensoren korrekt ist.

Figur 2 zeigt nun anhand eines Blockschaltbildes den Ablauf, der auf der erfindungsgemäßen Vorrichtung durchgeführt wird. Im zentralen Steuergerät 12 wird in Block 20 die Beschleunigung in Fahrzeuglängsrichtung ermittelt. In Block 23 wird daraus durch Prozessormittel ein Geschwindigkeitsabbau durch Integration bestimmt. Der Geschwindigkeitsabbau wird dann in Block 25 einer Schwellenentscheidung unterzogen. Liegt der Geschwindigkeitsabbau über einer Schwelle, dann wird auf eine Auslösung entschieden. Die Schwelle ist zeitveränderlich und wird hier in Abhängigkeit von der relativen Aufprallgeschwindigkeit durch einen im Heck angeordneten Sensor verändert. Die Schwelle kann auch weitere Veränderungen erfahren, die aber hier nicht relevant sind. Der Aufprallsensor 13 im Heck ermittelt im Block 21 sein Signal, aus dem in Block 24 die relative Aufprallgeschwindigkeit bestimmt wird. Diese relative Aufprallgeschwindigkeit wird dann zur Veränderung der Schwelle im Block 25 verwendet. Das Ausgangssignal des Auslöseentscheiders 25, ob eine Auslöseentscheidung vorliegt oder nicht, wird einem UND-Gatter 26 zugeführt. An einem zweiten Eingang des UND-Gatters 26 liegt das Signal eines Plausibilitätssensors 22 an. Zeigt auch dieses Signal auf eine Auslöseentscheidung, dann wird im Block 27 die Auslösung der aktiven Kopfstütze 10 erfolgen. Die Auslösung anderer Rückhaltemittel ist hier der Einfachheit halber nicht dargestellt

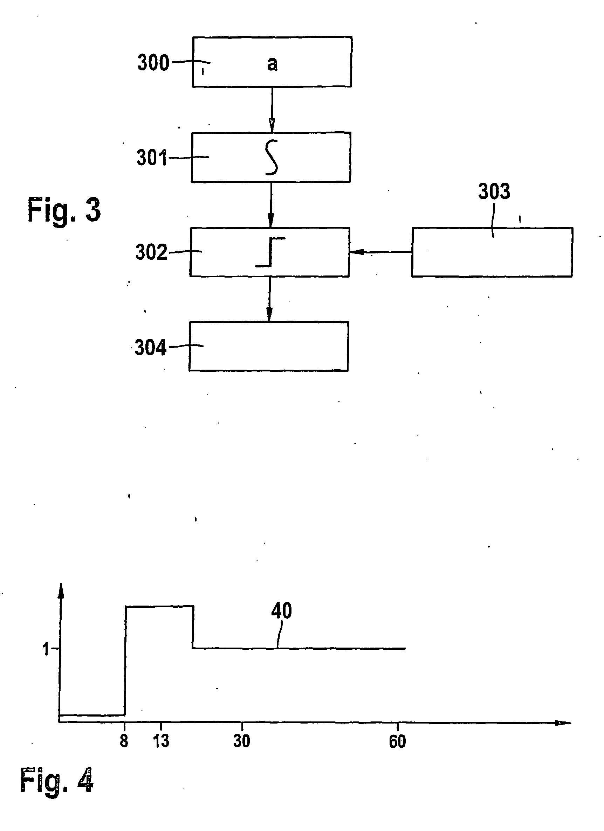

Figur 3 zeigt in einem Flussdiagramm die Auslösung der aktiven Kopfstütze 10 ohne den Plausibilitätssensor. In Verfahrensschritt 300 wird durch den im Steuergerät 12 angeordneten Beschleunigungssensor die Verzögerung ermittelt. In Verfahrensschritt 301 wird daraus der Geschwindigkeitsabbau bestimmt. In Verfahrensschritt 302 wird der Geschwindigkeitsabbau mit einer zeitlich veränderlichen Schwelle verglichen, wobei sich die Schwelle in Abhängigkeit von der relativen Aufprallgeschwindigkeit verändert. Die relative Aufprallgeschwindigkeit wird in Verfahrensschritt 303 durch einen im Heck angeordneten Aufprallsensor bestimmt. In Abhängigkeit von diesem Schwellwertvergleich wird in Verfahrensschritt 304 eine Ansteuerung der aktiven Kopfstütze 10 erfolgen.

Figur 4 zeigt in einem Diagramm eine mögliche Abhängigkeit des Einflussfaktors auf die Schwelle als Funktion der relativen Aufprallgeschwindigkeit. Auf der Abszisse ist die relative Aufprallgeschwindigkeit in Stundenkilometern angegeben. Auf der Ordinate ist der Einflussfaktor auf die veränderliche Schwelle gezeigt. Bis beispielsweise zur relativen Aufprallgeschwindigkeit von 8 km/h ist der Einfluss der relativen Aufprallgeschwindigkeit derart, dass die Auslöseschwelle extrem angehoben wird, so dass eine Auslösung sehr unwahrscheinlich wird. Wird die relative Aufprallgeschwindigkeit von 8 km/h überschritten, nimmt der Einflussfaktor durch einen Sprung zu, und die Schwelle wird entsprechend verändert, derart dass eine Auslösung wahrscheinlicher wird. Im Bereich von ungefähr 20 km/h nimmt der Einflussfaktor 40 den Wert 1 an, sodass hier kein Einfluss mehr auf die Schwelle vorgenommen wird. Je nach Simulationen und experimentellen Daten kann die Einflussnahme unterschiedlich vorgenommen werden. Es wird hier davon ausgegangen, dass ab 20 km/h das zentrale Signal zur Unterscheidung ausreicht. Dies kann auch anders appliziert werden.

## Patentansprüche

1. Verfahren zur Ansteuerung einer aktiven Kopfstütze (10) für ein Fahrzeug, wobei die Kopfstütze (10) in Abhängigkeit von einem ersten Signal eines im Fahrzeug zentral angeordneten ersten Aufprallsensors (12) und von einem zweiten Signal eines im Heckbereich des Fahrzeugs angeordneten zweiten Aufprallsensors (13) angesteuert wird, **dadurch gekennzeichnet, dass** als das erste Signal ein Beschleunigungssignal durch Integration in einem Geschwindigkeitsabbau überführt wird, dass der Geschwindigkeitsabbau einer Schwellenentscheidung unterzogen wird, wobei auf die Ansteuerung entschieden wird, wenn der Geschwindigkeitsabbau über der Schwelle liegt, die zeitveränderlich ist und in Abhängigkeit von einer relativen Aufprallgeschwindigkeit als dem zweiten Signal verändert wird.

2. Verfahren nach Anspruch 1, **dadurch gekennzeichnet, dass** ein dritter Aufprallsensor vorgesehen ist, der ein drittes Signal erzeugt und dass die Kopfstütze (10) in Abhängigkeit vom ersten, zweiten und dritten Signal angesteuert wird.

## Claims

1. Method for triggering an active headrest (10) for a vehicle,
wherein the headrest (10) is triggered as a function of a first signal of a first impact sensor (12) which is arranged centrally in the vehicle, and of a second signal of a second impact sensor (13) which is arranged in the rear region of the vehicle, **characterized in that** an acceleration signal is transmitted as the first signal by integration into a speed reduction process **in that** the speed reduction process is subjected to a threshold decision, wherein it is decided to perform triggering if the speed reduction is above the threshold which is variable over time and is changed as a function of a relative impact speed as the second signal.

2. Method according to Claim 1, **characterized in that** a third impact sensor is provided which generates a third signal, and **in that** the headrest (10) is actuated as a function of the first, second and third signals.

## Revendications

1. Procédé de commande d'un appui-tête (10) actif de véhicule, l'appuie-tête (10) étant commandé en fonction d'un premier signal d'un premier détecteur de collision (12) disposé centralement dans le véhicule et d'un deuxième signal d'un deuxième détecteur de collision (13) disposé dans la partie arrière du véhicule,
**caractérisé en ce que**
comme premier signal, un signal d'accélération est converti par intégration en une décomposition de vitesse, **en ce que** la décomposition de vitesse subit une discrimination en fonction d'un seuil et
**en ce que** la commande décide si la décomposition de vitesse est supérieure au seuil, qui peut varier dans le temps et qui est modifié en fonction d'une vitesse relative de collision en tant que deuxième signal.

2. Procédé selon la revendication 1, **caractérisé en ce qu'**un troisième détecteur de collision est prévu qui forme un troisième signal et **en ce que** l'appuie-tête (10) est commandé en fonction du premier, du deuxième et du troisième signal.
